## Europäisches Patentamt

## European Patent Office

## Office européen des brevets

(19)

(11) Veröffentlichungsnummer: **0 216 795**
**B1**

(12) **EUROPÄISCHE PATENTSCHRIFT**

(45) Veröffentlichungstag der Patentschrift:
**14.06.89**

(51) Int. Cl.⁴: **B 65 G 19/28**, B 65 G 19/12

(21) Anmeldenummer: **86901038.9**

(22) Anmeldetag: **31.01.86**

(86) Internationale Anmeldenummer:
**PCT/DE 86/00031**

(87) Internationale Veröffentlichungsnummer:
**WO 86/04565 (14.08.86** Gazette 86/18)

(54) **TROG-KETTEN-FÖRDERER.**

(30) Priorität: **04.02.85 DE 3503638**

(43) Veröffentlichungstag der Anmeldung:
**08.04.87 Patentblatt 87/15**

(45) Bekanntmachung des Hinweises auf die Patenterteilung:
**14.06.89 Patentblatt 89/24**

(84) Benannte Vertragsstaaten:
**AT BE CH DE FR GB IT LI LU NL SE**

(56) Entgegenhaltungen:
**DE-A- 3 339 404**

(73) Patentinhaber: **FRAUNHOFER-GESELLSCHAFT ZUR FÖRDERUNG DER ANGEWANDTEN FORSCHUNG E.V.,**
**Leonrodstrasse 54, D-8000 München 19 (DE)**

(72) Erfinder: **WEHKING, Karl-Heinz, Auf dem Kampe 6,**
**D-4952 Porta Westfalica (DE)**

(74) Vertreter: **Schiller, Walter, Dr. et al, Kanzlei Münich,**
**Steinmann, Schiller Willibaldstrasse 36-38,**
**D-8000 München 21 (DE)**

# Beschreibung

Die Erfindung betrifft einen Trog-Ketten-Förderer nach dem Oberbegriff des Anspruchs 1.

Ein Trog-Ketten-Förderer der bekannten Art weisen an einem Ende eine Antriebsstation und am anderen Ende eine Spannstation für die Förderkette auf. Sie werden horizontal, geneigt oder auch senkrecht angeordnet. Bei horizontaler oder leicht geneigter Anordnung liegt die maximale Förderlänge im Bereich von 50 bis 80 m. Bei Sonderausführungen können 120 m erreicht werden. Die Förderketten horizontal arbeitender Trog-Ketten-Förderer haben in der Regel Mitnehmer, die als flache rechteckige Platten ausgebildet sind, die mit einer Längskante den Boden überstreichen und deren kurze Seite den unteren Bereich der entsprechenden Seitenwand überdeckt. Schräg bzw. vertikal fördernde Trog-Ketten-Förderer haben in spezieller Weise ausgebildete Mitnehmer, die eine korbähnliche Form aufweisen.

Ein Trog-Ketten-Förderer gemäß dem Oberbegriff des Patentanspruchs 1 ist beispielsweise aus der DE-A-33 39 404 bekannt. Insbesondere ist bei dem Trog-Ketten-Förderer gemäß dem Oberbegriff des Patentanspruchs 1 die Außenkontur der Mitnehmer nicht der Innenkontur des Troges angepaßt.

Die üblicherweise geschlossen ausgebildeten Trog-Ketten-Förderer werden einerseits im Lebensmittel- und Tierfutter-Bereich, also zur Förderung von allen Arten von Kornfrüchten, Mehl, Schrot und dgl., und andererseits zur Förderung von Sand, Stäuben, Spänen usw. eingesetzt.

Der Erfindung liegt die Aufgabe zugrunde, die Förderleistung von Trog-Ketten-Förderer zu erhöhen.

Diese Aufgabe wird erfindungsgemäß durch die Merkmale des Kennzeichnungsteiles des Anspruchs 1 gelöst. Überraschenderweise hat sich gezeigt, daß bei einer solchen Ausgestaltung bei gleichem Energieeinsatz die Förderleistung um bis zu 50% erhöht wird bzw. daß bei gleicher Förderleistung der Energieeinsatz deutlich reduziert wird. Die grundlegende Erkenntnis der Erfindung liegt darin, daß das zu fördernde Material oberhalb des bzw. der Mitnehmer wie ein Block gefördert wird, in dem die einzelnen Partikel also nur geringe Relativbewegungen zueinander ausführen. Aus dieser Grunderkenntnis wurde die technische Lehre abgeleitet, den Querschnitt des Troges oberhalb der Mitnehmer zu vergrößern, wobei von den üblichen nur den Boden überstreichenden Mitnehmern ausgegangen wurde. Diese Maßnahmen führen zu dem überraschenden Effekt. Die erfindungsgemäßen Maßnahmen führen weiterhin auch zu einer wesentlichen Reduktion der Herstellkosten, zu einer Senkung der Lärmentwicklung und zu einer Reduktion der erforderlichen Typenvielfalt. Die Form des Troges und der im Verhältnis zu herkömmlichen Konstruktionen kleine Boden führt dazu, daß eine erheblich verbesserte Restentleerung des Förderers erreicht wird. Die erfindungsgemäß ausgestalteten Trog-Ketten-Förderer sind universell im Lebensmittel- und Tierfutter-Bereich und auch im industriellen Bereich einsetzbar. Die Förderung in den erfindungsgemäßen Trog-Ketten-Förderern ist besonders schonend, da die Transportgeschwindigkeit bezogen auf die Menge des zu transportierenden Materials besonders gering ist. Dies ist von besonderer Bedeutung bei abriebempfindlichem Material, wie beispielsweise pelletiertem Rinderfutter. Die erfindungsgemäßen Maßnahmen sind primär für horizontal arbeitende Trog-Ketten-Förderer vorgesehen. Sie können auch bei schräg arbeitenden Trog-Ketten-Förderern eingesetzt werden, deren Neigungswinkel gegenüber der Horizontalen bis zu 10 bis 15° beträgt. Vor allem aber steigt durch die erfindungsgemäße Anpassung der Innenkontur der Mitnehmer an die Außenkontur des Troges die Förderleistung bei gleichem Energieeinsatz um bis 50%; dies bedeutet, daß andererseits bei gleicher Förderleistung der Energieeinsatz entsprechend absinkt. Darüberhinaus ist das Restentleerungsverhalten des erfindungsgemäß ausgebildeten Trog-Ketten-Förderers wesentlich besser als das eines Förderers gemäß dem Oberbegriff des Anspruchs 1.

Besonders günstig hinsichtlich der Erhöhung der Förderleistung und besonders einfach hinsichtlich der Herstellung sind die Ausgestaltungen nach den Ansprüchen 2 bis 5.

Insbesondere die Ausgestaltung der Mitnehmer nach Anspruch 6 führt zu einer Optimierung im Förderverhalten. In den Ansprüchen 7 und 8 sind niedergelegt, daß der sich oberhalb der Mitnehmer bewegende Block ausreichend groß ist. Eine weitere Optimierung im Förderverhalten wird durch die Maßnahmen nach Anspruch 9 erreicht.

Wenn zusätzlich ein Zwischenboden vorgesehen ist, dann führt dies zu der vorteilhaften Ausgestaltung nach den Ansprüchen 10 bis 13.

Weitere Vorteile der Erfindung ergeben sich aus der Beschreibung eines Ausführungsbeispiels anhand der Zeichnung. Es zeigt:

Fig. 1 eine schematisierte perspektivische Ansicht eines Trog-Ketten-Förderers nach der Erfindung,

Fig. 2 einen vertikalen Querschnitt durch den Trog-Ketten-Förderer gemäß der Schnittlinie II-II in Fig. 1,

Fig. 3 einen vertikalen Querschnitt durch den Trog-Ketten-Förderer gemäß der Schnittlinie III-III in Fig. 1,

Fig. 4 eine perspektivische Darstellung einer Förderkette,

Fig. 5 einen vertikalen Querschnitt durch eine abgewandelte Ausführungsform eines Troges und

Fig. 6 eine im Trog nach Fig. 5 eingesetzte Förderkette.

## Weg zur Ausführung der Erfindung

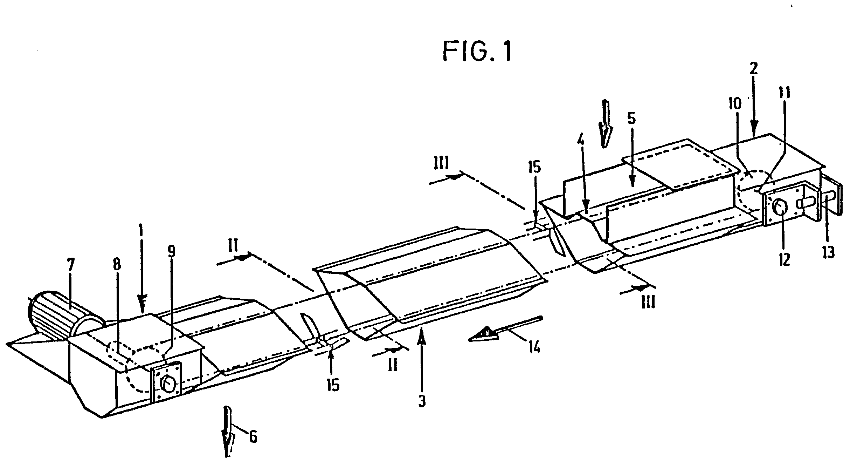

Der in Fig. 1 dargestellte Trog-Ketten-Förderer weist an einem Ende eine Antriebsstation 1 und am anderen Ende eine Spannstation 2 auf. Zwischen den beiden Stationen 1, 2 ist ein Trog 3 angeordnet. Dieser ist in der Nachbarschaft zur Spannstation 2 mit einem Zwischenboden 4 versehen. Über diesem befindet sich an einer beliebigen Stelle eine Einlauföffnung 5 für das zu fördernde Material. Wenn kein Zwischenboden 4 vorgesehen ist, also eine reine Streckenförderung erfolgt, dann ist die Einlauföffnung 5 regelmäßig unmittelbar benachbart zur Spannstation 2 vorgesehen, da das zu fördernde Material direkt in den Trog 3 von oben eingegeben wird. Der Zwischenboden 4 kann sich über eine beliebige Länge des Troges 3 erstrecken, so daß das zu fördernde Material zunächst auf dem Zwischenboden 4 gefördert wird und erst danach die Förderung im Trog 3 erfolgt. Die Übergabe vom Zwischenboden 4 in den Trog 3 ist dabei auch im Bereich der Spannstation 2. Die Zwischenboden-Förderung hat primär den Zweck, den Druck einer über der Einlauföffnung 5 lastenden Materialsäule aus dem Einlaufbereich fernzuhalten. Eine der Antriebsstation 1 benachbarte Auslauföffnung ist durch einen Auslauf-Richtungspfeil 6 markiert. Die Antriebsstation 1 weist einen elektrischen Antriebsmotor 7, auf dessen Abtriebswelle 8 mindestens ein Antriebskettenrad 9 gelagert ist.

In der Spannstation ist ein Spannkettenrad 10 auf einer frei drehbaren Spannwelle 11 gelagert, deren Lager 12 mittels Spindeln 13 in Längsrichtung des Troges, d.h. in Förderrichtung 14 oder entgegengesetzt zur Förderrichtung 14 verstellt werden können. Um das Antriebskettenrad 9 und das Spannkettenrad 10 ist eine Förderkette 15 geführt, die somit mittels der Spindeln 13 gespannt werden kann. Insoweit als der Trog-Ketten-Förderer bis hierher beschrieben ist, ist er allgemein bekannt und in der Praxis üblich.

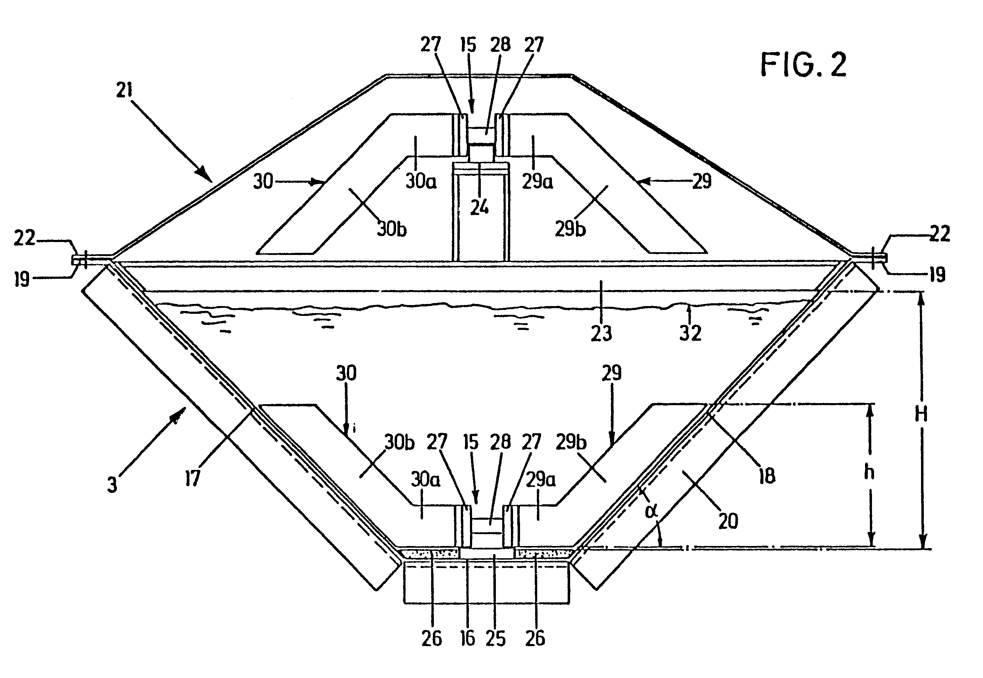

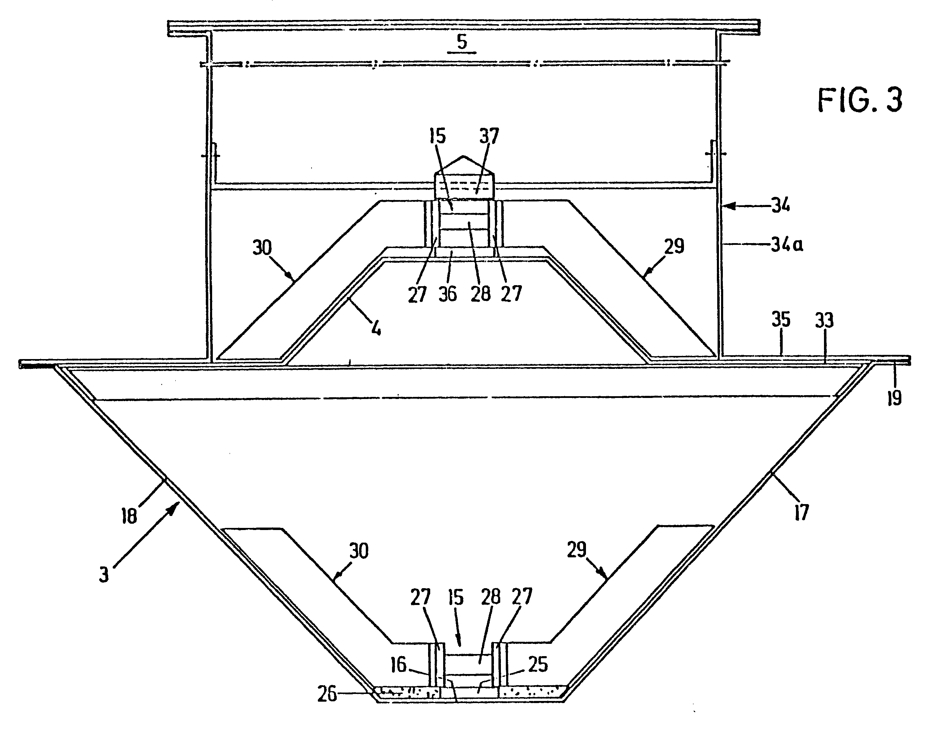

Wie aus den Fig. 2 und 3 hervorgeht, weist der Trog 3 einen Boden 16 und Seitenwände 17, 18 auf, die einstückig aus einem Blech gebogen sind, wobei an den oberen Längsrändern Flansche 19 ebenfalls durch Abbiegen mit ausgebildet sind. Der Trog 3 ist üblicherweise aus einzelnen Schüssen zusammengesetzt, die an ihren Enden aus Winkeleisen gebildete Flansche 20 aufweisen, die gleichzeitig zur Verstärkung dienen. Der Trog 3 ist durch eine ebenfalls etwa trapezförmige Abdeckung 21 abgedeckt, die ebenfalls aus einem Blech unter gleichzeitiger Ausbildung von Flanschen 22 hergestellt ist, wobei die Flansche 22 zur Verbindung mit den Flanschen 19 dienen.

Im Bereich der Flansche 19 des Troges 3 sind in Abständen voneinander Querträger 23 zur Abstützung einer Rückführschiene 24 oder von Rückführrollen für das Obertrum der Förderkette 15 angebracht.

Auf dem Boden 16 des Troges 3 ist eine das Untertrum der Förderkette 15 tragende Gleitschiene 25 angeordnet, bei der es sich um ein Verschleißteil handelt. Im übrigen kann der Boden 16 mit einem Belag 26, beispielsweise aus Kunststoff, abgedeckt sein.

Der Trog 3 ist — wie bereits erwähnt — trapezförmig ausgebildet, d.h. er erweitert sich vom Boden nach oben verhältnismäßig stark. Im dargestellten Ausführungsbeispiel haben die Seitenwände gegenüber dem Boden 16 eine Neigung von = 45°. Sie kann im Bereich von 30 bis 60° variieren, wobei der Bereich von 40 bis 50° besonders günstig ist.

Die Förderkette 15 kann in üblicher Weise als Laschenkette ausgebildet sein, wie sie in ihrem Grundaufbau bekannt ist. Hierbei sind Laschen 27 mittels Buchsen und Bolzen 28 gelenkig miteinander verbunden, an denen jeweils das Antriebskettenrad 9 bzw. das Spannkettenrad 10 angreift. An den Laschen 27 sind spiegelsymmetrisch zueinander Mitnehmer 29, 30 befestigt. Die Anordnung der Mitnehmer 29, 30 muß nicht jeweils spiegelsymmetrisch zueinander, also paarweise, sein. Sie können auch jeweils in Längsrichtung der Förderkette 15 gegeneinander versetzt angeordnet sein. Die Förderkette 15 muß selbstverständlich nicht als Laschenkette ausgebildet sein, sondern kann auch als Gabelkette ausgestaltet sein. Wenn die Mitnehmer 29, 30 an den Laschen 27 angeschraubt oder angenietet werden, dann kann es zweckmäßig sein, über die Länge der Laschen 27 verteilt mehrere Bohrungen 31 vorzusehen. Hierbei ist es dann möglich, den Abstand benachbarter Mitnehmer 29 bzw. 30 bzw. benachbarter Paare von Mitnehmern 29, 30 zu verändern, wodurch eine Optimierung des Förderverhaltens der Förderkette 15 erreicht wird.

Die Mitnehmer 29, 30 sind in ihrer Außenkontur dem Verlauf des Bodens 16 und der Seitenwände 17 bzw. 18 angepaßt. Ihre Innenkontur verläuft etwa parallel zur Außenkontur mit der üblichen Breite. Die Gesamtinnenkontur der beiden Mitnehmer 29, 30 eines Mitnehmer-Paares ist also ebenfalls etwa trapezförmig. Die Mitnehmer 29, 30 weisen dem Boden 16 zugeordnete horizontale Stege 29a, 30a auf, von deren äußeren Enden sich Flügel — 29b, 30b nach oben erstrecken. Stege und Flügel haben etwa die gleiche Breite. Die Mitnehmer 29, 30 sind in einer Ebene angeordnet, die quer zur Förderrichtung 14 verläuft. Für die Höhe h der Mitnehmer 29, 30 gilt im Verhältnis zur Gesamthöhe H des Troges 3 die mathematische Beziehung $h \leq 0,8H$. Bevorzugt gilt $h \leq 0,6H$. Bei der Darstellung in Fig. 2 gilt für die Höhe h der Mitnehmer 29, 30 etwa $h = 0,6H$. Die Mitnehmer 29, 30 können aber auch deutlich kürzer ausgebildet sein. Die Förderhöhe 32 des zu fördernden Materials ist in Fig. 2 angedeutet. Sie ist annähernd so groß wie die Höhe H des Troges 3.

Wie aus Fig. 3 hervorgeht, ist der Zwischenboden 4 der Innenkontur eines Paares von Mitnehmern 29, 30 angepaßt und erstreckt sich mit Flanschen 33 nach außen bis über die Flansche 19. Oberhalb des Zwischenbodens 4 ist ein im Querschnitt rechteckförmiges Obergehäuse 34 mit etwa senkrechten Wänden 34a vorgesehen, das ebenfalls mit Flanschen 35 auf den Flanschen 33 und damit den Flanschen 19 aufliegt, so daß insgesamt eine einfache Verbindung möglich ist. Die durch einfaches Abkanten eines Bleches gebildeten Wände 34a erstrecken sich vom Zwischenboden 4 unmittelbar benachbart zu den freien äußeren Enden der Flügel 29b, 30b der Mitnehmer 29, 30, so daß auch auf dem Zwischenboden 4 eine gleichgute Förderung möglich ist, wie im Trog 3.

Auf dem Zwischenboden 4 ist mittig eine Gleitschiene 36 für die Förderkette 15 vorgesehen. Oberhalb dieser Gleitschiene 36 ist zumindest im Bereich der Einlauföffnung 5 eine Ketten-Niederhalte-Schiene 37 angeordnet, die im Obergehäuse 34 abgestützt ist. Diese Ketten-Niederhalte-Schiene dient dazu, ein «Klettern» der Förderkette 15 im Bereich der Einlauföffnung 5 zu verhindern. Ein derartiges «Klettern» tritt auf, wenn das zu fördernde Gut durch die Einlauföffnung 5 auf den Zwischenboden 4 aufgegeben wird. Durch den Förderwiderstand wird eine nach oben gerichtete Kraft auf die Mitnehmer 29, 30 ausgeübt, so daß die Förderkette 15 von der Gleitschiene 36 abheben würde, wenn nicht durch die Ketten-Niederhalte-Schiene ein Widerlager gebildet würde.

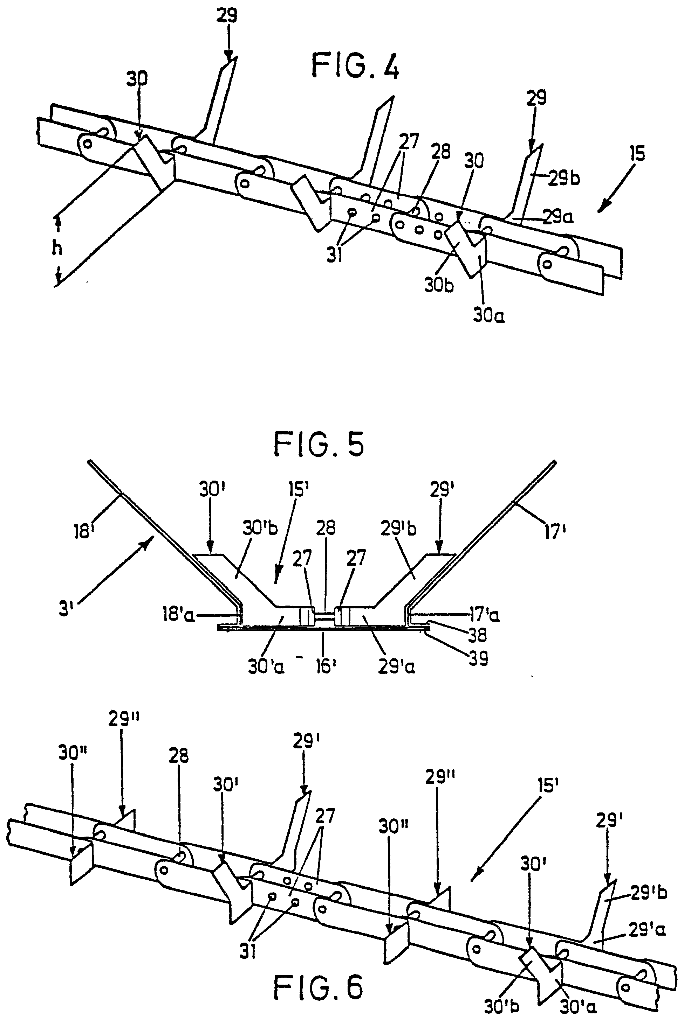

Bei einer abgewandelten, in Fig. 5 dargestellten Ausführungsform wird der Trog 3' durch einen Boden 16' und Seitenwände 17', 18' gebildet, die jeweils Einzelteile sind und durch nach außen gebogene Flansche 38, 39 miteinander verbunden sind. Die Seitenwände 17' und 18' haben in ihrem unteren, dem Bodem 16' zugewandten Bereich einen kurzen vertikalen Wandabschnitt 17'a bzw. 18'a. Die Mitnehmer 29' und 30' sind diesem Verlauf der Wandabschnitte angepaßt. Die Höhe dieser Wandabschnitte 17'a bzw. 18'a entspricht etwa der Höhe der Stege 29'a, 30'a der Mitnehmer 29', 30', kann aber auch größer sein. Auch für diese Ausführungsform gilt, daß der Trogquerschnitt im wesentlichen trapezförmig ist, sich also insbesondere nach oben stetig erweitert. Die Flügel 29'b und 30'b der Mitnehmer 29' und 30' sind in ihrer Außenkontur also wiederum dem Verlauf der Seitenwände 17' und 18' angepaßt. Wie aus Fig. 6 hervorgeht, können zum einen bei der Förderkette 15' aber auf generell bei allen Förderketten Mitnehmer 29'', 30'' vorgesehen sein, die nur aus unteren horizontalen Stegen bestehen, bei denen also die nach oben ragenden Flügel 29'b, 30'b bzw. 29'b, 30'b der Mitnehmer 29, 30 bzw. 29', 30' nicht vorhanden sind. Solche Mitnehmer 29'', 30'' können im Wechsel mit den Mitnehmern 29', 30' vorgesehen sein. Auch hier können selbstverständlich zur Abstandseinstellung der Mitnehmer längs der Laschen 27 Bohrungen vorgesehen sein.

*Gewerbliche Anwendbarkeit*

Die erfindungsgemäß ausgestalteten Trog-Ketten-Förderer sind universell im Lebensmittel- und Tierfutterbereich sowie im industriellen Bereich einsetzbar. Sie eignen sich dabei insbesondere für horizontale und leicht geneigte Anordnungen bis zu einer Förderlänge von 50 bis 80 m, in Sonderfällen bis 120 m.

**Patentansprüche**

1. Trog-Ketten-Förderer mit einem aus einem Boden (16, 16') und Seitenwänden (17, 18; 17', 18') bestehenden Trog (3, 3'), dessen Querschnitt sich nach oben durchgehend erweitert, und mit einer in diesem bewegbaren, mit Mitnehmern (29, 30; 29', 30') versehenen Förderkette (15, 15'), dadurch gekennzeichnet, daß die Außenkontur aller Mitnehmer (29, 30; 29', 30') im wesentlichen der Innenkontur des Bodens (16, 16') und der Seitenwände (17, 18; 17', 18') angepaßt ist und daß die Innenkontur aller Mitnehmer im wesentlichen parallel zur Außenkontur verläuft.

2. Förderer nach Anspruch 1, dadurch gekennzeichnet, daß der Trog (3, 3') etwa trapezförmig ausgebildet ist.

3. Förderer nach Anspruch 2, dadurch gekennzeichnet, daß die Seitenwände (17, 18; 17', 18') mit dem Boden (16, 16') jeweils einen Winkel (α) von 30 bis 60° einschließen.

4. Förderer nach Anspruch 3, dadurch gekennzeichnet, daß die Seitenwände (17, 18; 17', 18') mit dem Boden (16, 16') jeweils einen Winkel (α) von 40 bis 50 ° einschließen.

5. Förderer nach Anspruch 4, dadurch gekennzeichnet, daß die Seitenwände (17, 18; 17', 18') mit dem Boden (16, 16') jeweils einen Winkel (α) von etwa 45° einschließen.

6. Förderer nach Anspruch 1, dadurch gekennzeichnet, daß die Mitnehmer (29, 30; 29', 30') parallel zum Boden (16, 16') angeordnete Stege (29a, 30a; 29'a, 30'a) und sich an deren Ende anschließende, parallel zu den Seitenwänden (17, 18; 17', 18') verlaufende Flügel (29b, 30b; 29'b, 30'b) aufweisen.

7. Förderer nach Anspruch 1 oder 6, dadurch gekennzeichnet, daß die Mitnehmer (29, 30; 29', 30') sich über weniger als 80% der Höhe (H) des Troges (3; 3') erstrecken.

8. Förderer nach Anspruch 7, dadurch gekennzeichnet, daß die Mitnehmer (29, 30; 29', 30') sich über weniger als 60% der Höhe (H) des Troges (3; 3') erstrecken.

9. Förderer nach einem der Ansprüche 1 bis 8, dadurch gekennzeichnet, daß die Mitnehmer (29, 30; 29', 30'; 29'', 30'') in Förderrichtung (14) veränderbar an der Förderkette (15, 15') angebracht sind.

10. Förderer mit einem über dem Trog angeordneten Zwischenboden, nach Anspruch 1, dadurch gekennzeichnet, daß die Innenkontur der Mitnehmer (29, 30; 29', 30') und der Querschnitt des Zwischenbodens (4) einander angepaßt sind.

11. Förderer nach Anspruch 10, dadurch gekennzeichnet, daß der Querschnitt des Zwischenbodens (4) und die Innenkontur der Mitnehmer (29, 30; 29', 30') trapezförmig sind.

12. Förderer nach Anspruch 11, dadurch gekennzeichnet, daß über dem Zwischenboden (4) eine Ketten-Niederhalter-Schiene (37) angeordnet ist.

13. Förderer nach Anspruch 10, dadurch gekennzeichnet, daß der Zwischenboden (4) seitlich von hochstehenden Wänden (34a) begrenzt wird, die bis an die freien Enden der Mitnehmer (29, 30) heranragen.

**Claims**

1. Trough-chain conveyor including a trough (3, 3') composed of a bottom plate (16, 16') and side walls (17, 18; 17', 18'), with the cross-section of said trough continuously flaring upwardly, and including a conveyor chain (15, 15') mobile in said trough and provided with driving elements (29, 30; 29', 30'), characterized in that the outside contour of all driving elements (29, 30; 29', 30') is substantially matched with the inside contour of the bottom plate (16, 16') and the side walls (17, 18; 17', 18'), and that the inside contour of all driving elements extends substantially in parallel to the outside contour.

2. Conveyor according to Claim 1, characterized in that said trough (3, 3') is of an approximately trapezoidal shape.

3. Conveyor according to Claim 2, characterized in that the side walls (17, 18; 17', 18') respectively form an angle ( α) of 30 to 60° with the said bottom plate (16, 16').

4. Conveyor according to Claim 3, characterized in that side walls (17, 18; 17', 18') respectively form

an angle (α) of 40 to 50° with the said bottom plate (16, 16').

5. Conveyor according to Claim 4, characterized in that the side walls (17, 18; 17', 18') respectively form an angle (α) of 45°, approximately, with the said bottom plate (16, 16').

6. Conveyor according to Claim 1, characterized in that the driving elements (29, 30; 29', 30') include cross-bars (29a, 30a; 29'a, 30'a) disposed parallel to the bottom plate (16, 16') as well as wings (29b, 30b; 29'b, 30'b) which join the ends of said cross-bars and extend parallel to the side walls (17, 18; 17', 18').

7. Conveyor according to Claim 1 or 6, characterized in that the driving elements (29, 30; 29', 30') extend over a distance corresponding to less than 80% of the height (H) of the said trough (3; 3').

8. Conveyor according to Claim 7, characterized in that said driving elements (29, 30; 29', 30') extend over a distance corresponding to less than 60% of the heigh (H) of said trough (3; 3').

9. Conveyor according to any of Claims 1 through 8, characterized in that said driving elements (29, 30; 29', 30'; 29'', 30'') are so fastened at said conveyor chain (15, 15') that they may be varied in the conveying direction (14).

10. Conveyor including an intermediate plate disposed above the trough, according to Claim 1, characterized in that the inside contour of said driving elements (29, 30; 29', 30') and the cross-section of said intermediate plate (4) are mutually matched.

11. Conveyor according to Claim 10, characterized in that the cross-section of said intermediate plate (4) and the inside contour of said driving elements (29, 30; 29', 30') are of a trapezoidal shape.

12. Conveyor according to Claim 11, characterized in that a chain hold-down bar (37) is disposed above the intermediate plate (4).

13. Conveyor according to Claim 10, characterized in that the intermediate plate (4) is laterally defined by upwardly rising walls (34a) which project up to the free ends of said driving elements (29, 30).

## Revendications

1. Transporteur en masse, comprenant un auget (3, 3') constitué par un fond (16, 16') et par des parois latérales (17, 18; 17', 18'), la section transversale dudit auget s'évasant en continu en haut, et comprenant de même une chaîne transporteuse (15, 15') pourvue des poussoirs (29, 30; 29', 30') et mobile dans ledit auget, caractérisé en ce que le contour extérieur de tous les poussoirs (29, 30; 29', 30') est essentiellement conformé au contour intérieur dudit fond (16, 16') et desdites parois latérales (17, 18; 17', 18'), et en ce que le contour intérieur de tous les poussoirs s'étend essentiellement en parallèle avec le contour extérieur.

2. Transporteur selon la Revendication 1, caractérisé en ce que ledit auget (3, 3') a essentiellement la forme d'un trapézoid environ.

3. Transporteur selon la Revendication 2, caractérisé en ce que les parois latérales (17, 18; 17', 18') coopèrent avec ledit fond (16, 16') afin de former respectivement un angle (α) entre 30 et 60°.

4. Transporteur selon la Revendication 3, caractérisé en ce que lesdits parois latérales (17, 18; 17', 18') coopèrent avec ledit fond (16, 16') afin de former respectivement un angle (α) entre 40 et 50°.

5. Transporteur selon la Revendication 4, caractérisé en ce que les parois latérales (17, 18; 17', 18') coopèrent avec ledit fond (16, 16') afin de former respectivement un angle (α) de 45° environ.

6. Transporteur selon la Revendication 1, caractérisé en ce que lesdits poussoirs (29, 30; 29', 30') sont pourvus des traverses horizontales (29a, 30a; 29'a, 30'a) parallèles audit fond (16, 16') ainsi que des ailes (29b, 30b; 29'b, 30'b) qui prolonguent les extrémités desdites traverses et s'étendent en parallèle auxdites parois latérales (17, 18; 17', 18').

7. Transporteur selon la Revendication 1 ou 6, caractérisé en ce que lesdits poussoirs (29, 30; 29', 30') s'étendent par moins que 80% de l'hauteur (H) dudit auget (3; 3').

8. Transporteur selon la Revendication 7, caractérisé en ce que lesdits poussoirs (29, 30; 29', 30') s'étendent par moins que 60% de l'hauteur (H) dudit auget (3; 3').

9. Transporteur selon quelconque des Revendications 1 à 8, caractérisé en ce que lesdits poussoirs (29, 30; 20', 30'; 29'', 30'') sont disposés à ladite chaîne transporteuse (15, 15') pour être déplaçables au sens de transport (14).

10. Transporteur comprenant une cloison intermédiaire au-dessus dudit auget, selon la Revendication 1, caractérisé en ce que le contour intérieur desdits poussoirs (29, 30; 29', 30') et la section transversale de ladite cloison intermédiaire (4) sont conformés l'un à l'autre.

11. Transporteur selon la Revendication 10, caractérisé en ce que la section transversale de ladite cloison intermédiaire (4) ainsi que le contour intérieur desdits poussoirs (29, 30; 29', 30') ont une forme trapézoidale.

12. Transporteur selon la Revendication 11, caractérisé en ce qu'une ornière presse-chaîne (37) disposée au-dessus de la cloison intermédiaire (4).

13. Transporteur selon la Revendication 10, caractérisé en ce que la cloison intermédiaire (4) est latéralement définie par des parois surélévées (34a) qui s'étendent en haut jusqu'aux extrémités libres desdits poussoirs (29, 30).

FIG. 1

FIG. 2

EP 0 216 795 B1

FIG. 3

FIG. 4

FIG. 5

FIG. 6